# EUROPÄISCHE PATENTSCHRIFT

(11) **EP 1 711 859 B1**
(45) Veröffentlichungstag und Bekanntmachung des Hinweises auf die Patenterteilung: **26.11.2008**
(21) Anmeldenummer: 04719364.4
(22) Anmeldetag: 11.03.2004
(51) Int. Cl.: G03B 1/48, G03B 19/18

(54) **FILMFÜHRUNG FÜR EINE LAUFBILDKAMERA**
FILM GUIDE FOR A FILM CAMERA
GUIDE-FILM DE CAMERA

(30) Priorität: 04.02.2004 WO PCT/DE2004/000237
(43) Veröffentlichungstag der Anmeldung: 18.10.2006
(73) Patentinhaber: ARNOLD & RICHTER CINE TECHNIK GMBH & CO. BETRIEBS KG, 80799 München (DE)
(72) Erfinder: BAUER, Fritz, Gabriel, A-3002 Purkersdorf (AT); HANDLER, Josef, A-1160 Wien (AT)
(74) Vertreter: Ninnemann, Detlef
(86) Internationale Anmeldenummer: PCT/DE2004/000555
(87) Internationale Veröffentlichungsnummer: WO 2005/076067

(56) Entgegenhaltungen:
- DE-U- 8 531 946
- US-A- 5 184 158
- US-A1- 2002 171 808
- US-B1- 6 457 827

## Beschreibung

Die Erfindung bezieht sich auf eine Filmführung für eine Laufbildkamera gemäß dem Oberbegriff des Anspruchs 1.

Zur Filmführung von Laufbildfilmen in Laufbildkameras ist im optischen Strahlengang des Aufnahmeobjektivs der Laufbildkamera ein Bildfensterausschnitt eines Bildfensters angeordnet, das die Größe der zu belichtenden Fläche der Einzelbilder des Laufbildfilmes bestimmt und dessen Filmebene die Filmebene einer Greiferbühne und eines in die Greiferbühne integrierten Abstandsfensters gegenübersteht, so dass zwischen den beiden Filmebenen ein Filmkanal zwischen dem Bildfenster und der Greiferbühne bzw. ein Filmspalt zwischen dem Bildfenster und dem Abstandsfenster zur Aufnahme des Laufbildfilmes ausgebildet wird. Der Filmkanal bzw. Filmspalt legt den Laufbildfilm in einer Bildebene fest, so dass ein konstantes Auflagemaß in Bezug auf das Kameraobjektiv und damit eine gleichbleibende Fokussierungsebene für den Laufbildfilm während der Belichtung der Einzelbilder gewährleistet ist.

Der zwischen dem Bildfenster einerseits und der Greiferbühne und dem Abstandsfenster ausgebildete Filmkanal bzw. Filmspalt ist dabei so bemessen, dass zum einen im Bereich des Bildfensterausschnitts die Fokussierungsebene bei der Belichtung der Einzelbilder des Laufbildfilmes erhalten bleibt und zum anderen weder ein Flattern des Laufbildfilms noch eine erhöhte Reibung zwischen dem Laufbildfilm und dem Rahmen des Bildfensters sowie der Filmebenenfläche der Greiferbühne und des Abstandsfensters auftritt, die zu Geräuschen, zu einer Beschädigung des Laufbildfilmes und zu einem erhöhten Filmtransportwiderstand führen würden. Zur Minimierung der Reibung an den Laufbildfilmen beim Filmtransport durch den Filmkanal und Filmspalt weist die Greiferbühne seitliche Gleitstege, auf denen der üblicherweise perforierte Rand des Laufbildfilmes gleitet, und das Abstandsfenster sogenannte Gleitstege auf, die sich beispielsweise in Bewegungsrichtung des Laufbildfilmes erstrecken und an der Rückseite des Laufbildfilmes anliegen, so dass der Laufbildfilm nicht vollflächig am Abstandsfenster anliegt.

Aus der DE 85 31 946 U1 ist eine Laufbild-Filmaufnahmekamera mit einen Filmführungskanal bildenden Führungsflächen bekannt, über die der Film in Zu- und Abführbereichen zu und von einem Bildfenster und im Bereich des Bildfensters bzw. zwischen dem Bildfenster und einer Filmandruckplatte gleitend geführt ist. Um eine minimale und gleichmäßige Reibung im Filmführungskanal und damit ein leichtes Gleiten sowie eine minimale Beanspruchung und Beschädigung des Films beim Filmtransport auch bei starken Temperaturschwankungen sicherzustellen, weisen die Führungsflächen eine wellenförmige Oberfläche auf, wobei die Wellenberge und Wellentäler quer zur Filmlaufrichtung angeordnet sind.

Zum intermittierenden Filmtransport ist in einer Laufbildkamera ein Filmtransportmechanismus vorgesehen, der ein in einem Antriebsmodul angeordnetes Greiferschaltwerk aufweist, das mit einer oder mehreren Greiferspitzen eines einseitigen oder doppelseitigen Greifers durch längliche Öffnungsschlitze der Greiferbühne in die seitlich der zu belichtenden Filmbilder angeordneten Filmperforationen eingreift und den Laufbildfilm bei jedem Filmtransportschritt um jeweils ein Filmbild weiter transportiert. In der Stillstandsphase des Filmbildes greift mindestens ein Sperrgreifer durch eine Bohrung der Greiferbühne in die Filmperforation des Laufbildfilmes ein und sichert den Bildstand während der Filmbelichtung.

Zum leichteren Einlegen des Laufbildfilmes in eine Laufbildkamera ist das Antriebsmodul zusammen mit dem an der Greiferbühne des Antriebsmoduls abgestützten Abstandsfenster gegenüber dem Bildfenster verschieb- oder verschwenkbar, so dass der Filmkanal zwischen dem Bildfenster und der Greiferbühne und der Filmspalt zwischen dem Bildfenster und dem Abstandsfenster zur Aufnahme des Laufbildfilmes vergrößert werden. Die Verbindung des Abstandsfensters mit der Greiferbühne erfolgt über Justageschrauben, die das Abstandsfenster an der Greiferbühne abstützen, wobei das Abstandsfenster über einen oder mehrere Andruckhebel gegenüber der Greiferbühne angefedert ist. Dies hat zur Folge, dass die Größe und Parallelität des Filmspaltes über mehrere, bewegte Teile, nämlich über die Justageschrauben, die Anfederung und die mit dem Antriebsmodul bewegliche Greiferbühne sichergestellt wird.

Dies kann beispielsweise nach einem Verschieben oder Verschwenken des Antriebsmoduls zum Einlegen eines Laufbildfilms zu einer Vergrößerung oder Verkleinerung des Filmkanals bzw. Filmspaltes bzw. zu einer mangelhaften Parallelität der gegenüberstehenden Bildebenen des Bildfensters und des Abstandsfensters führen, so dass die Fokussierungsebene nicht in allen Bereichen des Filmkanals bzw. Filmspaltes gewährleistet ist bzw. eine zu starke Reibung des Laufbildfilmes auftritt.

Aufgabe der vorliegenden Erfindung ist es, eine Filmführung der eingangs genannten Art anzugeben, bei der eine konstante, voreinstellbare Größe und Parallelität eines zwischen einem Bildfenster und einer Greiferbühne und/oder einem Abstandsfenster ausgebildeten Filmkanals bzw. Filmspaltes mit geringen Toleranzanforderungen gewährleistet ist.

Diese Aufgabe wird erfindungsgemäß durch die Merkmale des Anspruchs 1 gelöst.

Die erfindungsgemäße Lösung gewährleistet die Einhaltung eines konstanten, voreinstellbaren, parallelen Filmkanals und Filmspaltes zwischen dem Bildfenster und der Greiferbühne bzw. dem Abstandsfenster einer Laufbildkamera und damit die exakte Einhaltung einer Fokussierungsebene einerseits sowie definierter Reibungsverhältnisse andererseits bei geringen Toleranzanforderungen und dem entsprechend geringen Herstellungskosten.

Die erfindungsgemäße Lösung ist sowohl auf den zwischen dem Bildfenster und der Greiferbühne gebildeten Filmkanal als auch auf den zwischen dem Bildfenster und dem Abstandsfenster ausgebildeten Filmspalt anwendbar. Dabei wird die Größe und Parallelität des Filmkanals ausschließlich durch die Abstützung der Greiferbühne am Bildfenster und die Größe und Parallelität des Filmspaltes durch die Abstützung des Abstandsfensters am Bildfenster festgelegt, wodurch die Abhängigkeit des Filmkanals von der Abstützung der Greiferbühne über nicht definierte Anlageflächen am Bildfenster und die Abhängigkeit des zwischen dem Abstandsfenster und dem Bildfenster ausgebildeten Filmspaltes von der angefederten Verbindung des Abstandsfensters mit der Greiferbühne vermieden wird, so dass auch bei einem Verschieben und/oder Verschwenken der mit dem Antriebsmodul verbundenen Greiferbühne zum Filmeinlegen die vorgegebene Größe und Parallelität entweder des Filmkanals oder des Filmspaltes bzw. sowohl des Filmkanals als auch des Filmspaltes gewährleistet ist.

Vorzugsweise ist bzw. sind die Greiferbühne und/oder das Abstandsfenster über mehrere als Abstandshalter ausgebildete Vorsprünge an mindestens einer Anlagefläche des Bildfensters abgestützt, wobei die Vorsprünge Eckpunkte einer geometrischen Figur sind.

In einer bevorzugten Ausführungsform ist bzw. sind die Greiferbühne und/oder das Abstandsfenster über drei Vorsprünge an der mindestens einen Anlagefläche des Bildfensters abgestützt, wobei der erste und zweite Vorsprung der Greiferbühne und/oder des Abstandsfensters auf einer parallel zur Bewegungsrichtung des Laufbildfilmes verlaufenden Seitenkante der Greiferbühne und/oder des Abstandsfensters und der dritte Vorsprung auf der gegenüberliegenden Seitenkante der Greiferbühne und/oder des Abstandsfensters vorzugsweise mittig zwischen dem ersten und zweiten Vorsprung angeordnet sind.

Alternativ kann die Abstützung der Greiferbühne und/oder des Abstandsfensters über jeweils einen vorzugsweise als Steg oder flächenförmig ausgebildeten Vorsprung an der mindestens einen Anlagefläche des Bildfensters oder über jeweils mindestens zwei auf jeder Seite der Greiferbühne und/oder des Abstandsfensters angeordnete Vorsprünge an der mindestens einen Anlagefläche des Bildfensters erfolgen.

Durch die Abstützung der Greiferbühne und/oder des Abstandsfensters direkt am Bildfenster über die Vorsprünge oder Stege und insbesondere über die drei an den Eckpunkten eines gleichschenkligen Dreiecks angeordneten Vorsprünge wird die Größe und Parallelität des Filmkanals und/oder Filmspaltes ausschließlich durch die sehr genau mögliche Bearbeitung eines Teils der Greiferbühne und/oder des Abstandsfensters, nämlich durch die Vorsprünge, festgelegt.

Während sich die am Abstandsfenster angeordneten Vorsprünge bei einem gerillten oder mit einer Vertiefung im Filmbilderbereich versehenen Bildfenster an einer von der Filmebene des Bildfensters abgestuften Ebene abstützen, kann bei Verwendung eines nicht gerillten oder im mittleren Bereich vertieften Bildfensters die Abstützung der Vorsprünge auch direkt an der Filmebene des Bildfensters erfolgen.

In einer bevorzugten Ausführungsform der erfindungsgemäßen Lösung ist das Abstandsfenster vorzugsweise über einen Andruckhebel gegenüber der das Abstandsfenster aufnehmenden Greiferbühne angefedert, die insbesondere Teil eines den Filmtransportmechanismus enthaltenden Antriebsmoduls ist.

Zum Einlegen des Laufbildfilmes in die Filmführung der Laufbildkamera bzw. zum Entnehmen des Laufbildfilmes aus der Filmführung der Laufbildkamera kann das vorzugsweise schwenk- und/oder verschiebbar im Kameragehäuse angeordnete Antriebsmodul gegenüber dem Bildfenster verschieb- und/oder verschwenkbar ausgeführt werden.

Anhand eines in der Zeichnung dargestellten Ausführungsbeispieles soll der der Erfindung zugrunde liegende Gedanke näher erläutert werden. Es zeigen:
- Fig. 1: eine Seitenansicht eines Kameragehäuses einer Laufbildkamera mit einem Antriebsmodul;
- Fig. 2: eine Seitenansicht der Filmführung zwischen einem Bildfenster und einem mit dem Antriebsmodul verbundenen Abstandsfenster;
- Fig. 3: eine Rückseitenansicht des Bildfensters Greiferbühne mit dahinterliegender Greiferbühne und Greifermechanismus;
- Fig. 4: eine perspektivische Darstellung des Bildfensters und Abstandsfensters;
- Fig. 5: eine perspektivische Darstellung eines Abstandsfensters mit drei Vorsprüngen;
- Fig. 6: einen Schnitt durch die Ansicht gemäß Fig. 3 entlang der Linie VI - VI;
- Fig. 7: eine vergrößerte Darstellung des Details VII gemäß Fig. 6;
- Fig. 8: eine perspektivische Ansicht auf die Filmebene des Bildfensters und die der Filmebene abgewandte Rückseite der Greiferbühne;
- Fig. 9: eine perspektivische Ansicht auf die Filmebene der Greiferbühne und des Abstandsfensters sowie auf die der Filmebene abgewandte Rückseite des Bildfensters;
- Fig. 10: eine Ansicht auf die Filmebene des Bildfensters und die Rückseite der Greiferbühne;
- Fig. 11: einen Schnitt durch die Anordnung gemäß Fig. 10 entlang der Linie XI-XI und
- Fig. 12: eine vergrößerte Darstellung des Details XII gemäß Fig. 11.

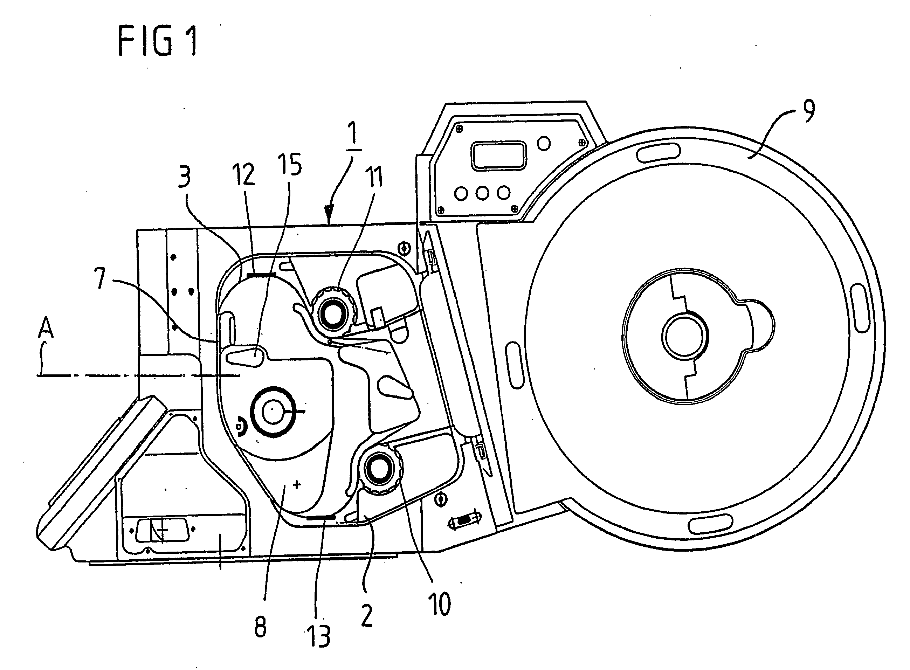

Fig. 1 zeigt eine Seitenansicht einer Laufbildkamera mit einem Kameragehäuse 1 mit aufgesetzter Filmkassette 9 und einem als Antriebsmodul 2 ausgebildeter Filmtransportmechanismus bei geöffneter Kameratür. Der Filmtransportmechanismus umfasst eine Vor- und Nachwicklung 10, 11 zum kontinuierlichen Filmtransport und Ausbildung von Filmschleifen 12, 13 zu beiden Seiten eines im Aufnahmestrahlengang A angeordneten Bildfensterausschnitts eines Bildfensters und einen Greifermechanismus 8 mit einem einen Filmtransportmotor, mit dem der Laufbildfilm 3 intermittierend in einer Filmführung transportiert wird. Die Filmführung bildet im Bereich des Aufnahmestrahlengangs A einen Filmkanal 7 zwischen dem mit dem Kameragehäuse 1 verbundenen Bildfenster und einer mit dem Antriebsmodul 2 verbundenen Greiferbühne des Greifermechanismus 8 aus, der sich im Bereich zwischen dem Bildfenster und dem mit der Greiferbühne verbundenen Abstandsfenster zu einem Filmspalt verengt.

Der Laufbildfilm 3 wird mittels des Greifermechanismus intermittierend bewegt und zur Belichtung einzelner Filmbilder vor dem im Aufnahmestrahlengang A angeordneten Bildfensterausschnitt des Bildfensters positioniert, der die zu belichtende Fläche der einzelnen Filmbilder bestimmt. Durch Betätigen eines Hebels 15 kann der Greifermechanismus 8 und mit ihm die Greiferbühne und das Abstandsfenster verschoben oder verschwenkt werden, so dass der Filmkanal 7 bzw. der Filmspalt zum Einlegen eines Laufbildfilmes 3 vergrößert wird. Nach dem Filmeinlegen wird der Greifermechanismus 8 zurückgeschwenkt und damit der für den Filmtransport vorgegebene Filmkanal 7 wieder ausgebildet, der beispielsweise bei Verwendung eines Laufbildfilmes mit einer maximalen Filmdicke von 0,16 mm nominell 0,23mm beträgt, während der Filmspalt nominell 0,175 mm beträgt.

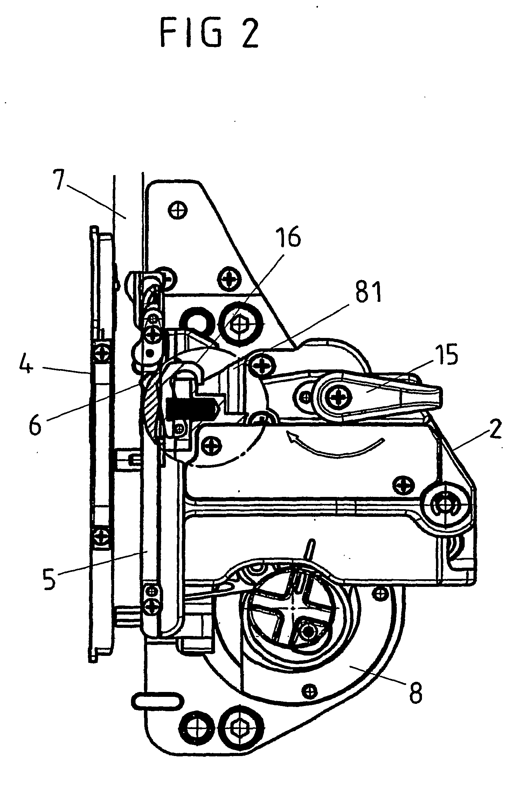

Fig. 2 zeigt in einer Seitenansicht das Bildfenster 4 sowie den Greifermechanismus 8 als Teil des Antriebsmoduls 2 mit gegenüber der Greiferbühne 5 des Greifermechanismus 8 angefedertem Abstandsfenster 6 in einer Filmeinlegeposition, d. h. in einer Stellung, in der der Greifermechanismus 8 zur Vergrößerung des Filmkanals 6 und mit ihm des Filmspalts zur Erleichterung des Filmeinlegens verschoben ist. Nach dem Filmeinlegen wird der Greifermechanismus 8 wieder in Richtung des Bildfensters 4 verschoben oder verschwenkt und dadurch der nominell eingestellte Filmkanal 6 und Filmspalt wieder hergestellt.

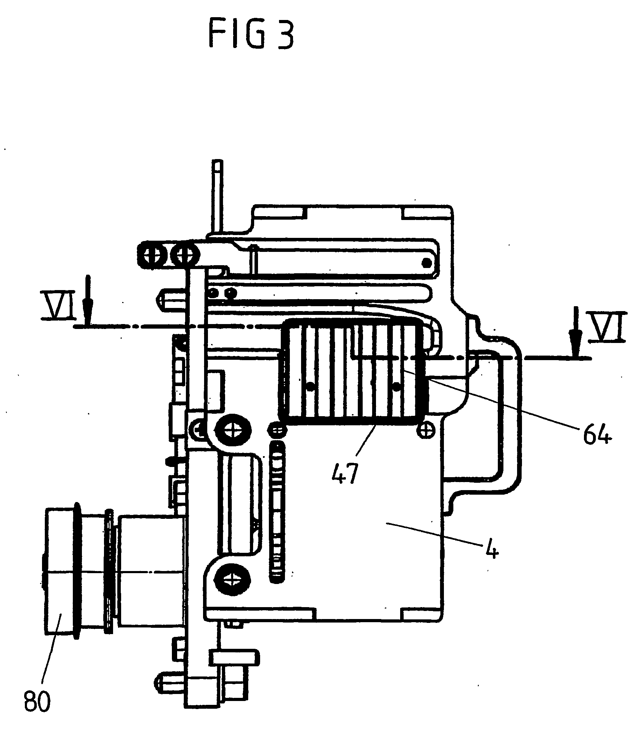

Fig. 3 zeigt eine Draufsicht auf die Anordnung gemäß Fig. 2 von Seiten des Bildfensters 4 mit dem dahinter befindlichen Greifermechanismus 8 und dem Filmtransportmotor 80 des Greifermechanismus 8 sowie dem Bildfensterausschnitts 47 des Bildfensters 4 und Gleitstegen 64 des mit dem Bildfensterausschnitt 47 fluchtenden Abstandsfensters.

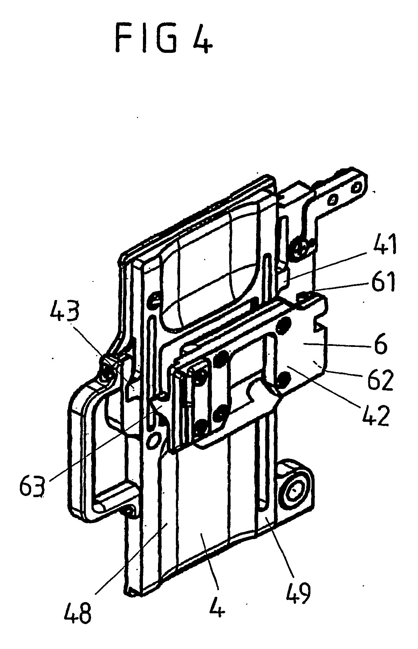

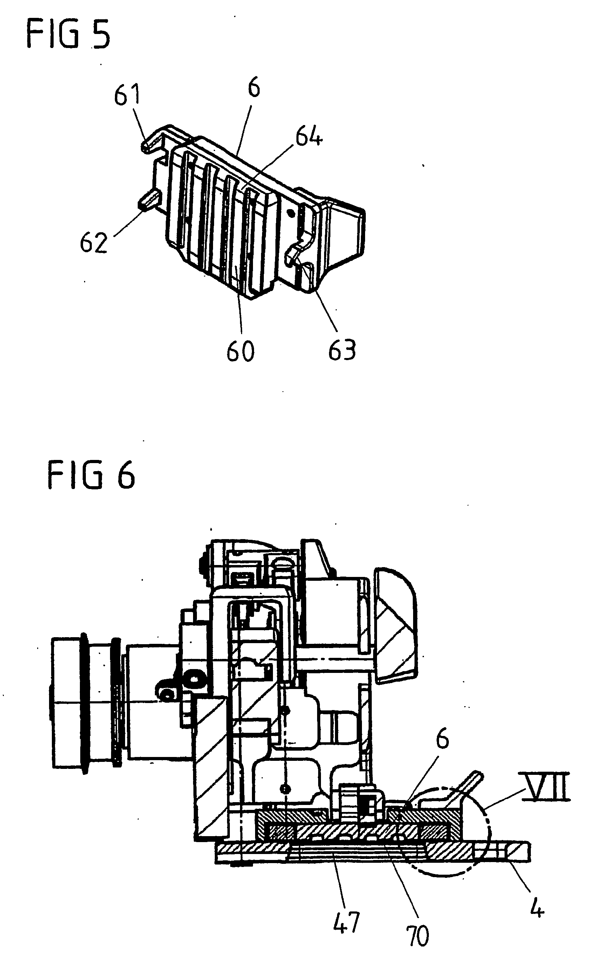

Fig. 4 zeigt in perspektivischer Darstellung die Zuordnung des in Fig. 5 vergrößert perspektivisch dargestellten Abstandsfensters 6 zum Bildfenster 4.

Zur Gewährleistung eines konstanten und parallelen Filmspaltes zwischen dem Bildfenster 4 und dem Abstandsfenster 6 weist das Abstandsfenster 6 drei Vorsprünge 61, 62, 63 auf, die seitlich einer Auflagefläche bzw. Filmebene 60 (Fig. 5) des Abstandsfensters 6 mit mehreren Gleitstegen 64 an den Eckpunkten eines gleichschenkligen Dreiecks angeordnet sind. Den Vorsprüngen 61, 62, 63 zugeordnet sind Anlageflächen 41, 42, 43 am Bildfenster 4, die je nach Ausführungsform des Bildfensters 4 an der Filmebene 40 des Bildfensters 4 oder an einer gegenüber der Filmebene 40 abgestuften Ebene des Bildfensters 4, insbesondere an erhabenen seitlichen Gleitstegen 48, 49 angeordnet sind.

Die Anordnung der Vorsprünge 61, 62, 63 an den Eckpunkten eines gleichschenkligen Dreiecks ist aber nicht zwingend, es kann auch eine beliebig andere Konfiguration gewählt werden. Alternativ können zwei, vorzugsweise als längliche Stege oder als Flächen ausgebildete Vorsprünge auf jeder Seite des Abstandsfensters 6 oder jeweils mindestens zwei oder mehr Vorsprünge auf jeder Seite des Abstandsfensters 6 in beliebiger Zahl auf beiden Seiten sowie in gleichen oder unterschiedlichen Abständen und Ausrichtungen vorgesehen werden.

Fig. 6 zeigt in einem Schnitt entlang der Linie VI - VI gemäß Fig. 3 die Verhältnisse bei Ausbildung des nominellen Filmspaltes 70, d. h. bei zurückgeschwenktem bzw. zurückgeschobenem Greifermechanismus 8 nach dem Filmeinlegen.

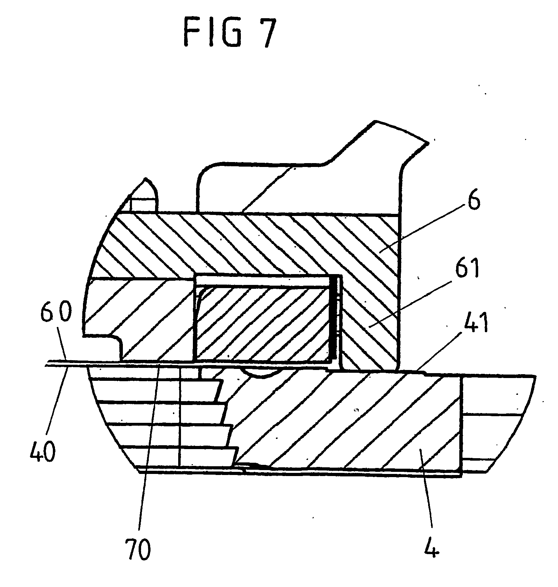

Fig. 7 zeigt die vergrößerte Darstellung des Details VII gemäß Fig. 6 mit dem Bildfenster 4 und dem Abstandsfenster 6, das mittels der Vorsprünge 61, 62, 63 an den Anlageflächen 41, 42, 43 des Bildfensters 4 abgestützt ist, wobei Fig. 7 die Anlage des Vorsprungs 61 an der Anlagefläche 41 zeigt. Die Filmebene 40 des Bildfensters 4 bildet die vordere Fläche des Filmspaltes 70 aus, während die hintere Fläche des Filmspaltes 70 durch die Filmebene 60 des Abstandsfensters 6 gebildet wird.

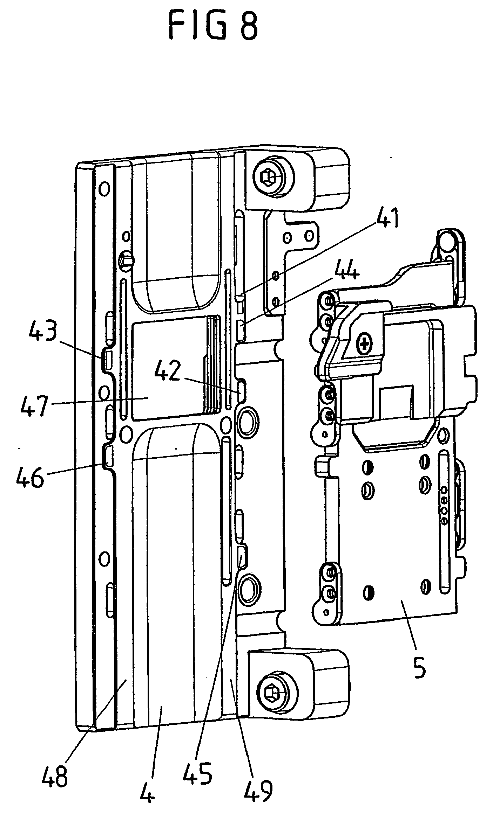

Fig. 8 zeigt in einer perspektivischen Ansicht die Filmebene des Bildfensters 4 sowie die der Filmebene abgewandte Rückseite der Greiferbühne 5. An den seitlich des Bildfensterausschnitts 47 in Längsrichtung des Bildfensters 4 verlaufenden erhabenen Gleitstegen 48, 49, auf denen die Perforationsränder des Laufbildfilms 3 beim Filmtransport entlanggleiten, sind Anlageflächen 41 - 46 als seitliche Ausbuchtungen ausgebildet, von denen die Anlageflächen 41, 42, 43 als Anlageflächen für die als Abstandshalter vorgesehenen Vorsprünge 61, 62, 63 des Abstandsfensters 6 und die Anlageflächen 44, 45, 46 als Anlageflächen für die als Abstandshalter vorgesehenen Vorsprünge 51, 52, 53 der Greiferbühne 5 vorgesehen sind. Durch die Anlage der Vorsprünge 51, 52, 53 der Greiferbühne 5 an den Anlageflächen 44, 45, 46 des Bildfensters 4 wird ein definierter Filmkanal von nominell 0,23 mm zwischen dem Bildfenster 4 und der Greiferbühne 5 ausgebildet.

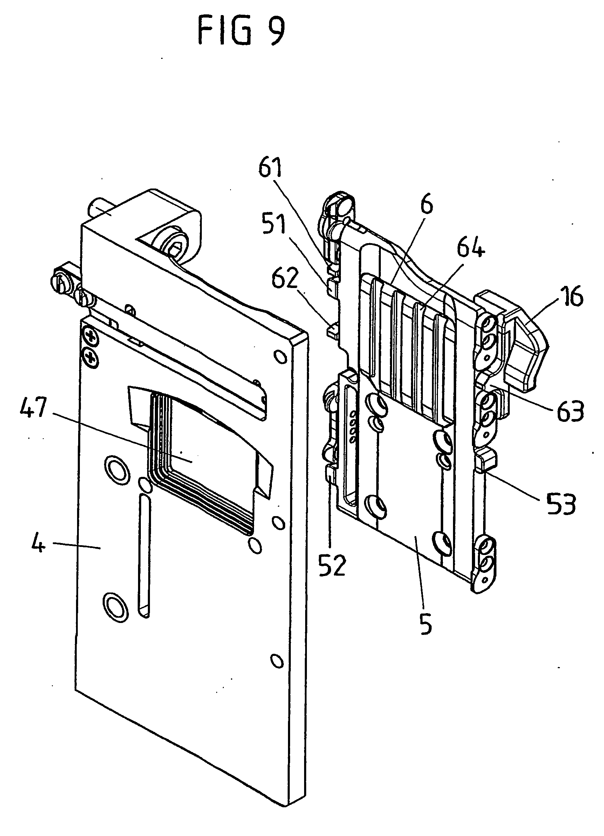

Fig. 9 zeigt in perspektivischer Ansicht die Filmebene der Greiferbühne 5 mit dem mit der Greiferbühne 5 angefedert verbundenen Abstandsfenster 6 sowie die der Filmebene abgewandte Rückseite des Bildfensters 4 mit dem darin angeordneten Bildfensterausschnitt 47. Die Greiferbühne 5 weist drei angenähert an den Spitzen eines gleichseitigen Dreiecks angeordnete Vorsprünge 51, 52, 53, von denen die Vorsprünge 51 und 52 an der einen Längsseite der Greiferbühne 5 und der andere Vorsprung 53 an der anderen Längsseite der Greiferbühne 5 angeordnet ist. Die Vorsprünge 51, 52, 53 liegen beim Filmtransport an den Anlageflächen 44, 45, 46 des Bildfensters 4 an, so dass der definierte Filmkanal 7 zwischen der Greiferbühne 5 und dem Bildfenster 4 ausgebildet wird. Gleichzeitig liegen die Vorsprünge 61 bis 63 des federnd mit der Greiferbühne 5 verbundenen Abstandsfensters 6 an den Anlageflächen 41 bis 43 des Bildfensters 4 an und bilden einen Filmspalt von nominell 0,175 mm in der Fokussierungsebene des Laufbildfilmes aus.

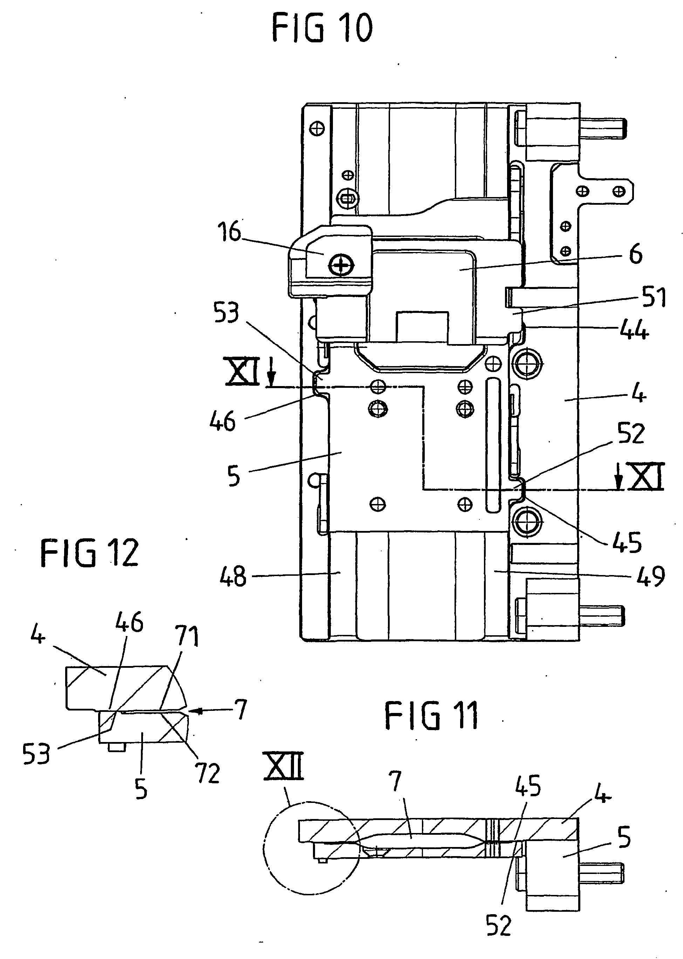

Fig. 10 zeigt in einer Draufsicht die Zuordnung der Greiferbühne 5 zum Bildfenster 4 im zusammengeführten Zustand von Bildfenster 4 und Greiferbühne 5, das heißt in einem Zustand nach dem Filmeinlegen und der für Filmaufnahmen bereiten Laufbildkamera.

Die Seitenansicht gemäß Fig. 10 zeigt die seitlich der Gleitstege 48, 49 des Bildfensters 4 herausgeführten Anlageflächen 44, 45, 46 zur Aufnahme der Vorsprünge 51, 52, 53 der Greiferbühne 5, die auf der einen bzw. anderen Längsseite der Greiferbühne 5 angeordnet sind. Weiterhin zeigt Fig. 10 die Rückseitenansicht des Abstandsfensters 6, das mittels des Andruckshebels 16 federnd an die Greiferbühne 5 angedrückt wird.

Anstelle der auf der einen bzw. anderen Längsseite des Bildfensters 4 und der Greiferbühne 5 angeordneten Vorsprünge 51, 52, 53 bzw. Anlageflächen 44, 45, 46 können auch durchgehende Stege auf beiden Seiten bzw. jeweils zwei oder mehr Vorsprünge und zugeordnete Anlageflächen auf jeder Seite der Greiferbühne 5 und des Bildfensters 4 vorgesehen werden.

Fig. 11 zeigt in einem Schnitt der Linie XI-XI gemäß Fig. 10 die Verhältnisse bei der Ausbildung des nominellen Filmkanals 7 zwischen der Greiferbühne 4 und dem Bildfenster 5 bei zurückgeschwenktem bzw. zurückgeschobenem Antriebsmodul mit daran befestigter Greiferbühne 5 beispielsweise nach dem Filmeinlegen. Der Filmkanal 7 wird durch die Anlage der Vorsprünge 51, 52, 53 gemäß Fig. 10, von denen in Fig. 11 die Vorsprünge 52 und 53 dargestellt sind, an den Anlageflächen 44, 45, 46, von denen in Fig. 11 die Anlageflächen 45 und 46 dargestellt sind, definiert.

Fig. 12 zeigt in vergrößerter Darstellung das Detail XII gemäß Fig. 11 mit einem Teil des Bildfensters 4 und der Greiferbühne 5 im Bereich der Abstützung der Greiferbühne 5 am Bildfenster 4 über den Vorsprung 53 und die Anlagefläche 46 zur Ausbildung des definierten, nominellen Filmkanals 7 von beispielsweise 0,23 mm zwischen der am Bildfenster 4 ausgebildeten vorderen Fläche 71 und der an der Greiferbühne 5 ausgebildeten hinteren Fläche 72 des Filmkanals 7.

### Bezugszeichenliste

| | |
|---|---|
| 1 | Kameragehäuse |
| 2 | Antriebsmodul |
| 3 | Laufbildfilm |
| 4 | Bildfenster |
| 5 | Greiferbühne |
| 6 | Abstandsfenster |
| 7 | Filmkanal |
| 8 | Greifermechanismus |
| 9 | Filmkassette |
| 10 | Nachwicklung |
| 11 | Vorwicklung |
| 12, 13 | Filmschleifen |
| 15 | Hebel |
| 16 | Andruckhebel |
| 40 | Filmebene des Bildfensters |
| 41 - 46 | Anlageflächen des Bildfensters |
| 47 | Bildfensterausschnitt |
| 48, 49 | Gleitstege des Bildfensters |
| 50 | Filmebene der Greiferbühne |
| 51 - 53 | Vorsprünge der Greiferbühne |
| 60 | Filmebene des Abstandsfensters |
| 61 - 63 | Vorsprünge des Abstandsfensters |
| 64 | Gleitstege |
| 70 | Filmspalt |
| 71 | Vordere Fläche des Filmkanals |
| 72 | Hintere Fläche des Filmkanals |
| 80 | Filmtransportmotor |
| A | Aufnahmestrahlengang |

## Patentansprüche

1. Filmführung für eine Laufbildkamera mit einem im Aufnahmestrahlengang der Laufbildkamera angeordneten Bildfenster (4), einer am Bildfenster (4) abgestützten Greiferbühne (5), zwischen deren einander zugewandten Filmebenen (40, 50) ein Filmkanal (7) ausgebildet ist, durch den der Laufbildfilm mittels eines Filmtransportmechanismus bewegt wird, und einem mit der Greiferbühne (5) verbundenen Abstandsfenster (6),
**dadurch gekennzeichnet,**
**dass** das Abstandsfenster (6) derart am Bildfenster (4) abgestützt ist, dass sich der-Filmkanal (7) zwischen den einander zugewandten Filmebenen (40, 60) des Bildfensters (4) und des Abstandsfensters (6) zu einem Filmspalt verengt.

2. Filmführung nach Anspruch 1, **dadurch gekennzeichnet, dass** das Abstandsfenster (6) über mehrere als Abstandshalter ausgebildete Vorsprünge (61, 62, 63) an mindestens einer Anlagefläche (41 - 43) des Bildfensters (4) abgestützt ist.

3. Filmführung nach Anspruch 2, **dadurch gekennzeichnet, dass** die Greiferbühne (5) über mehrere als Abstandshalter ausgebildete Vorsprünge (51, 52, 53) an mindestens einer Anlagefläche (44 - 46) des Bildfensters (4) abgestützt ist/sind.

4. Filmführung nach Anspruch 2 oder 3, **dadurch gekennzeichnet, dass** die Vorsprünge (51, 52, 53; 61, 62, 63) Eckpunkte einer geometrischen Figur sind.

5. Filmführung nach einem der Ansprüch 2 bis 4, **dadurch gekennzeichnet, dass** die Greiferbühne (5) und/oder das Abstandsfenster (6) über drei Vorsprünge (51, 52, 53; 61, 62, 63) an der mindestens einen Anlagefläche (40; 41 - 46) des Bildfensters (4) abgestützt ist/sind.

6. Filmführung nach Anspruch 5, **dadurch gekennzeichnet, dass** der erste und zweite Vorsprung (51, 52; 61, 62) der Greiferbühne (5) und/oder des Abstandsfensters (6) auf einer parallel zur Bewegungsrichtung des Laufbildfilmes (3) verlaufenden Seitenkante der Greiferbühne (5) und/oder des Abstandsfensters (6) und der dritte Vorsprung (53; 63) auf der gegenüberliegenden Seitenkante der Greiferbühne (5) und/oder des Abstandsfensters (6) vorzugsweise mittig zwischen dem ersten und zweiten Vorsprung (51, 52; 61, 62) angeordnet sind.

7. Filmführung nach Anspruch 2 oder 3, **dadurch gekennzeichnet, dass** die Greiferbühne (5) und/oder das Abstandsfenster (6) über jeweils einen vorzugsweise als Steg oder flächenförmig ausgebildeten Vorsprung an der mindestens einen Anlagefläche (40; 41 - 46) des Bildfensters (4) abgestützt ist/sind.

8. Filmführung nach Anspruch 2 oder 3, **dadurch gekennzeichnet, dass** die Greiferbühne (5) und/oder das Abstandsfenster (6) über jeweils mindestens zwei auf jeder Seite der Greiferbühne (5) und/oder des Abstandsfensters (5) angeordnete Vorsprünge an der mindestens einen Anlagefläche (40; 41 - 46) des Bildfensters (4) abgestützt ist/sind.

9. Filmführung nach mindestens einem der voranstehenden Ansprüche, **dadurch gekennzeichnet, dass** die Vorsprünge (51, 52, 53) an der Filmebene (40) des Bildfensters (4) abgestützt sind.

10. Filmführung nach mindestens einem der voranstehenden Ansprüche, **dadurch gekennzeichnet, dass** das Abstandsfenster (6) gegenüber der das Abstandsfenster (6) aufnehmenden Greiferbühne (5) angefedert ist.

11. Filmführung nach Anspruch 10, **dadurch gekennzeichnet, dass** das Abstandsfenster (6) über einen Andruckhebel (16) angefedert ist.

12. Filmführung nach mindestens einem der voranstehenden Ansprüche, **dadurch gekennzeichnet, dass** die Greiferbühne (5) Teil eines den Filmtransportmechanismus enthaltenden Antriebsmoduls (2) ist.

13. Filmführung nach mindestens einem der voranstehenden Ansprüche, **dadurch gekennzeichnet, dass** das Antriebsmodul (2) schwenk- und/oder verschiebbar im Kameragehäuse (1) angeordnet ist.

14. Filmführung nach mindestens einem der voranstehenden Ansprüche, **dadurch gekennzeichnet, dass** das Antriebsmodul (2) zum Einlegen eines Laufbildfilmes (3) in den zwischen dem Bildfenster (4) und der Greiferbühne (5) gebildeten Filmkanal (7) gegenüber dem Bildfenster (4) verschieb- und/oder verschwenkbar ist.

## Claims

1. A film guide for a movie camera having an image window (4) which is arranged in the recording beam path of the movie camera, a gripper platform (5) which is supported on the image window (4), between whose mutually facing film planes (40, 50) a film channel (7) is formed through which the movie film is moved by means of a film transport mechanism, and a spacing window (6) which is connected to the gripper platform (5),
**characterized**
**in that** the spacing window (6) is supported on the image window (4) in such a manner that the film channel (7) narrows between the mutually facing film planes (40, 60) of the image window (4) and the spacing window (6) to form a film gap.

2. The film guide as claimed in claim 1, **characterized in that** the spacing window (6) is supported on at least one contact surface (41-43) of the image window (4) via a plurality of projections (61, 62, 63) which are in the form of spacers.

3. The film guide as claimed in claim 2, **characterized in that** the gripper platform (5) is/are supported on at least one contact surface (44-46) of the image window (4) via a plurality of projections (51, 52, 53) which are in the form of spacers.

4. The film guide as claimed in claim 2 or 3, **characterized in that** the projections (51, 52, 53; 61, 62, 63) are corner points of a geometric figure.

5. The film guide as claimed in one of claims 2 to 4, **characterized in that** the gripper platform (5) and/or the spacing window (6) are/is supported on the at least one contact surface (40; 41-46) of the image window (4) via three projections (51, 52, 53; 61, 62, 63).

6. The film guide as claimed in claim 5, **characterized in that** the first and second projections (51, 52; 61, 62) on the gripper platform (5) and/or on the spacing window (6) are arranged on a side edge of the gripper platform (5) and/or of the spacing window (6) which run/runs parallel to the movement direction of the movie film (3), and the third projection (53; 63) is arranged on the opposite side edge of the gripper platform (5) and/or of the spacing window (6), preferably centrally between the first and second projections (51, 52; 61, 62).

7. The film guide as claimed in claim 2 or 3, **characterized in that** the gripper platform (5) and/or the spacing window (6) are/is supported on the at least one contact surface (40; 41-46) of the image window (4) via in each case one projection, which is preferably in the form of a web or is flat.

8. The film guide as claimed in claim 2 or 3, **characterized in that** the gripper platform (5) and/or the spacing window (6) are/is supported on the at least one contact surface (40; 41-46) of the image window (4) via in each case at least two projections, which are arranged on each side of the gripper platform (5) and/or of the spacing window (5).

9. The film guide as claimed in at least one of the preceding claims, **characterized in that** the projections (51, 52, 53) are supported on the film plane (40) of the image window (4).

10. The film guide as claimed in at least one of the preceding claims, **characterized in that** the spacing window (6) is sprung with respect to the gripper platform (5) which holds the spacing window (6).

11. The film guide as claimed in claim 10, **characterized in that** the spacing window (6) is sprung via a contact-pressure lever (16).

12. The film guide as claimed in at least one of the preceding claims, **characterized in that** the gripper platform (5) is part of a drive module (2) which contains the film transport mechanism.

13. The film guide as claimed in at least one of the preceding claims, **characterized in that** the drive module (2) is arranged in the camera housing (1) such that it can be pivoted and/or moved.

14. The film guide as claimed in at least one of the preceding claims, **characterized in that** the drive module (2) can be moved and/or pivoted with respect to the film window (4) in order to insert a movie film (3) into the film channel (7) which is formed between the image window (4) and the gripper platform (5).

## Revendications

1. Guide-film de caméra comprenant une fenêtre d'images (4) disposée dans la voie des rayons de prise de vue de la caméra, une plaque de préhension (5) supportée sur la fenêtre d'images (4), dont ses plans de film (40, 50) tournés l'un vers l'autre délimitent un canal de film (7), à travers lequel le film est déplacé au moyen d'un mécanisme de transport de film, et une fenêtre d'espacement (6) connectée à la plaque de préhension (5),
**caractérisé en ce que**
la fenêtre d'espacement (6) est supportée sur la fenêtre d'images (4) de telle sorte que le canal de film (7) entre les plans de film (40, 50) tournés l'un vers l'autre de la fenêtre d'images (4) et de la fenêtre d'espacement (6) se rétrécisse jusqu'à former une fente de film.

2. Guide-film selon la revendication 1, **caractérisé en ce que** la fenêtre d'espacement (6) est supportée par le biais de plusieurs saillies (61, 62, 63) réalisées sous forme d'éléments d'espacement sur au moins une surface d'appui (41 - 43) de la fenêtre d'images (4).

3. Guide-film selon la revendication 2, **caractérisé en ce que** la plaque de préhension (5) est supportée par le biais de plusieurs saillies (51, 52, 53) réalisées sous forme d'éléments d'espacement sur au moins une surface d'appui (44 - 46) de la fenêtre d'images (4).

4. Guide-film selon la revendication 2 ou 3, **caractérisé en ce que** les saillies (51, 52, 53 ; 61, 62, 63) sont des coins d'une figure géométrique.

5. Guide-film selon l'une quelconque des revendications 2 à 4, **caractérisé en ce que** la plaque de préhension (5) et/ou la fenêtre d'espacement (6) est/sont supportées par le biais de trois saillies (51, 52, 53 ; 61, 62, 63) sur l'au moins une surface d'appui (40 ; 41 - 46) de la fenêtre d'images (4).

6. Guide-film selon la revendication 5, **caractérisé en ce que** la première et la deuxième saillie (51, 52 ; 61, 62) de la plaque de préhension (5) et/ou de la fenêtre d'espacement (6) sont disposées sur une arête latérale de la plaque de préhension (5) et/ou de la fenêtre d'espacement (6) s'étendant parallèlement à la direction de déplacement du film (3) et la troisième saillie (53 ; 63) est disposée sur l'arête latérale opposée de la plaque de préhension (5) et/ou de la fenêtre d'espacement (6), de préférence au milieu entre la première et la deuxième saillie (51, 52 ; 61, 62).

7. Guide-film selon la revendication 2 ou 3, **caractérisé en ce que** la plaque de préhension (5) et/ou la fenêtre d'espacement (6) est/sont supportées par le biais d'une saillie réalisée à chaque fois de préférence sous forme de nervure ou sous forme plate, sur l'au moins une surface d'appui (40 ; 41-46) de la fenêtre d'images (4).

8. Guide-film selon la revendication 2 ou 3, **caractérisé en ce que** la plaque de préhension (5) et/ou la fenêtre d'espacement (6) est/sont supportées par le biais d'au moins deux saillies disposées à chaque fois de chaque côté de la plaque de préhension (5) et/ou de la fenêtre d'espacement (6) contre l'au moins une surface d'appui (40 ; 41-46) de la fenêtre d'images (4).

9. Guide-film selon au moins l'une quelconque des revendications précédentes, **caractérisé en ce que** les saillies (51, 52, 53) sont supportées sur le plan de film (40) de la fenêtre d'images (4).

10. Guide-film selon au moins l'une quelconque des revendications précédentes, **caractérisé en ce que** la fenêtre d'espacement (6) est supportée à ressort par rapport à la plaque de préhension (5) recevant la fenêtre d'espacement (6).

11. Guide-film selon la revendication 10, **caractérisé en ce que** la fenêtre d'espacement (6) est supportée à ressort par le biais d'un levier de pression (16).

12. Guide-film selon au moins l'une quelconque des revendications précédentes, **caractérisé en ce que** la plaque de préhension (5) fait partie d'un module d'entraînement (2) contenant le mécanisme de transport de film.

13. Guide-film selon au moins l'une quelconque des revendications précédentes, **caractérisé en ce que** le module d'entraînement (2) est disposé de manière pivotante et/ou coulissante dans le boîtier de la caméra (1).

14. Guide-film selon au moins l'une quelconque des revendications précédentes, **caractérisé en ce que** le module d'entraînement (2) peut être coulissé et/ou pivoté par rapport à la fenêtre d'images (4) pour insérer un film (3) dans le canal de film (7) formé entre la fenêtre d'images (4) et la plaque de préhension (5).
